# EUROPEAN PATENT SPECIFICATION

(11) **EP 4 450 950 B1**
(45) Date of publication and mention of the grant of the patent: **04.11.2026**
(21) Application number: 24198501.9
(22) Date of filing: 22.09.2017
(51) Int. Cl.: G01M 17/02

(54) **METHOD AND SYSTEM FOR DETECTING A PRESSURE DISTRIBUTION IN A FOOTPRINT AREA OF A TIRE**
VERFAHREN UND SYSTEM ZUR ERKENNUNG EINER DRUCKVERTEILUNG IN EINEM FOOTPRINT-BEREICH EINES REIFENS
PROCÉDÉ ET SYSTÈME DE DÉTECTION D'UNE DISTRIBUTION DE PRESSION DANS UNE ZONE D'EMPREINTE D'UN PNEU

(30) Priority: 30.09.2016 IT 201600098247
(43) Date of publication of application: 23.10.2024
(62) Document number(s) of the earlier application(s) in accordance with Art. 76 EPC: 17781192.4 / 3 519 792
(73) Proprietor: Pirelli Tyre S.p.A., 20126 Milano (IT)
(72) Inventor: SABATO, Diego, 20126 Milano (IT); MALOSIO, Anna Maria, 20126 Milano (IT)
(74) Representative: Tirloni, Bartolomeo

(56) References cited:
- ES-A1- 2 222 776
- BASF: "Lightweight material for tough applications", 1 September 2015 (2015-09-01), pages 1 - 3, XP093207258, Retrieved from the Internet <URL:https://www.basf.com/dam/jcr:71966f4b-3517-3f8b-a44f-148c2beba668/basf/www/global/documents/en/news-and-media/news-releases/2015/09/P325e_Schwalbe_Elastollan.pdf> [retrieved on 20240920]
- BASF: "Thermoplastic Polyurethane Elastomers (TPU) Elastollan - Product Range", 1 September 2022 (2022-09-01), pages 1 - 40, XP093207261, Retrieved from the Internet <URL:https://download.basf.com/p1/8a8082587fd4b608017fd6411cdd6d63/en/Elastollan<sup> <sup>_-_Thermoplastic_Polyurethane_Elastomers_(TPU)_-_Product_Range_Range_Chart_English.pdf?view#page=6> [retrieved on 20240920]

## Description

The present invention concerns a method and a system for detecting pressure distribution in the footprint area of a tire.

The articles "An Optical Method for Normal Contact Stress Measurement with Applications to Tire-Road Interaction" by Roth, Moore, Turner, Bridgestone/Firestone North American Tire, 2004 SEM X International Congress & Exposition on Experimental & Applied Mechanics, "An optical tire contact pressure test bench" by Castillo, Pérez De La Blanca, Cabrera & Simón, Department of Mechanical Engineering, University of Málaga, Campus El Ejido, 29013, Málaga, Spain - Vehicle System Dynamics, Feb 2007, and "Validation of a frustrated total internal reflection test bench for tire footprint pressure measurement" by Cheli, Zanoni, Sabato, Politecnico di Milano, Pirelli Tyre - Akron 2014, and the document ES 2 222 776 A1, describe a method for detecting pressure distribution in the footprint area of a tire, based on the suppression of total internal reflection of light.

The method comprises laterally illuminating a transparent plate in such a manner that the light rays propagate inside the plate, forming, with the line perpendicular to an upper surface, an angle greater than the critical angle of the plate material, pushing against the tread of an inflated tire against the surface, and acquiring an image of the resting surface with a camera placed under the plate.

Given that the degree of suppression of the total internal reflection of the rays on the resting surface (and thus local brightness) is a function of the local pressure exerted by the footprint of the tire resting on the plate, it is possible to obtain the pressure distribution by processing the acquired image.

To improve the results, a thin sheet is interposed between the tread and the plate.

The Applicant has observed that the characteristics of the interposed sheet play an essential role in the quality of the results of the pressure distribution detection method and that this sheet is not selected in an optimal manner in the prior art.

The Applicant has posed the issue of developing a method for detecting pressure distribution in the footprint area of a tire that is capable of providing accurate results with a high degree of sensitivity.

Lastly, the Applicant has found that by selecting the interposed sheet on the basis of specific selection criteria, a detection method that has the above-mentioned desired characteristics is obtained.

The term "maximum allowable pressure" is understood as the maximum pressure at which it is permitted to inflate the tire (value stamped on the tire according to the reference standards (e.g. ETRTO, NHTSA, etc.).

The term "load index" is understood as the maximum load value that the tire can bear (value stamped on the tire according to the reference standards (e.g. ETRTO, NHTSA, etc.).

The expression "characteristic curve associated with an assembly formed by a sheet, a plate, a beam of light rays and a camera" is understood as a curve that interrelates the pressure values exerted on the sheet and the corresponding grey-level values in the image acquired by the camera, once the operating conditions of the camera have been set (sensor sensitivity, exposure time etc.). An exemplary measurement test for determining the characteristic curve is described below. It is noted that the above-mentioned assembly, with the above-mentioned operating conditions used to determine the characteristic curve, is the same assembly used to perform the pressure distribution detection test.

In one aspect, the invention concerns a method for detecting a pressure distribution in a footprint area of a tire according to claim 1.

Preferably, said image has a full-scale grey level.

In another aspect, the invention concerns a system for detecting a pressure distribution in a footprint area of a tire according to claim 7.

Preferably, not part of the invention as claimed in the appended claims, it is envisaged that said sheet be selected in such a manner that it satisfies the following condition:
1) at a predetermined maximum pressure to be detected, comprised between 1 bar and 50 bar, a characteristic curve associated with the assembly formed by said sheet, said plate, said beam of light rays and said camera, assumes a grey-level value that is less than or equal to 90% of said full-scale grey level.

Preferably, it is envisaged that said sheet be selected in such a manner that it satisfies the following further condition:
2) said characteristic curve has a first derivative that is greater than or equal to 2 levels of grey per bar at least in a pressure range comprised between 10% and 70% of said maximum pressure.

Preferably, not part of the invention as claimed in the appended claims, it is envisaged that said sheet be selected in such a manner that it satisfies the following further condition:
3) in a test run, at a temperature ranging between 20° and 30°, comprising the following eight operations:
a) inflating said tire at a pressure greater than or equal to 1 bar and preferably less than or equal to a maximum allowable pressure for said tire;
b) resting said tread on said resting surface, with said sheet interposed between said tread and said resting surface;
c) inputting said beam of light rays into the plate;
d) pushing said tread against said resting surface with a force perpendicular to said resting surface and having a value that increases linearly for one minute up to a predetermined value equal to half of a load index of said tire;
e) acquiring a first image of said footprint area at said predetermined value of the perpendicular force;
f) subsequently increasing said value of the perpendicular force linearly for one minute up to a maximum value equal to said load index and, subsequently, keeping said tire pushed against said resting surface with said force equal to said maximum value for a time interval equal to 5 minutes;
g) subsequently decreasing said value of the perpendicular force linearly for one minute from said maximum value down to said predetermined value and acquiring a second image of said footprint area at said predetermined value;
h) associating a corresponding pressure value with each pixel of the first and second image by way of said characteristic curve;
a difference, in absolute value, between a first area occupied by pixels of the first image, at which said corresponding pressure value is greater than or equal to 0.5 bar, and a second area occupied by pixels of the second image, at which said corresponding pressure value is greater than or equal to 0.5 bar, is less than or equal to 5% of said first area.

According to the Applicant, the above-mentioned characteristics make the pressure distribution detection method particularly accurate and sensitive.

In fact, the fact that at the predetermined maximum pressure to be detected, the characteristic curve assumes a grey-level value that is less than or equal to 90% of said full-scale grey level, makes it possible to measure all pressure values in the range of interest, thus avoiding that a substantial number of pixels assume a saturation or near-saturation grey level. In this situation, it would in fact become difficult to distinguish between different pressure values that would give rise to the same saturation grey level or to very close grey levels.

Moreover, the fact that the first derivative of the characteristic curve is greater than or equal to 2 levels of grey per bar at least in a pressure range comprised between 10% and 70% of the maximum pressure, ensures sufficient differentiation of the brightness response of pixels corresponding to slightly different pressure levels, and thus sufficient sensitivity.

Furthermore, according to the Applicant, the above-mentioned requirement in relation to the above-mentioned test run ensures that the interposed sheet does not adhere to the plate, or that the adherence thereof is sufficiently slight. In fact, in the case of excessive adhesion to the plate, the sheet leaves spurious regions of brightness originating from the previous measurements, which bring about changes in excess of the measured pressure values. The test run mentioned above was developed by the Applicant to verify that these spurious regions of brightness do not exceed a threshold of acceptability.

Furthermore, according to the Applicant, this requirement ensures that the interposed sheet does not unacceptably generate memory effects, owing to which, due to excessive relaxation times of the material after removal of the cause of the deformation, the material retains at least part of the deformations to which it was subjected in the previous tests, yielding measured pressure values that are higher than the real values.

Note that the present invention encompasses in the above-mentioned measurement method, the use of any sheet that meets the requirements described hereinabove relative to the characteristic curve and the test run, regardless of the fact that this characteristic curve is actually determined and/or the test run is actually carried out for the purpose of selecting the sheet.

Preferably, not part of the invention as claimed in the appended claims, at said predetermined maximum pressure to be detected, said characteristic curve assumes a grey-level value that is less than or equal to 80% of said full-scale grey level, more preferably less than or equal to 70% of said full-scale grey level. In this manner, even higher dynamics are ensured in the range of interest.

Preferably, said characteristic curve has a first derivative that is greater than or equal to 3 levels of grey per bar, more preferably greater than or equal to 5 levels of grey per bar, at least in a pressure range comprised between 10% and 70% of said maximum pressure, more preferably between 10% and 90% of said maximum pressure. Sensitivity in the desired measurement range is thus optimized.

Preferably, not part of the invention as claimed in the appended claims, said characteristic curve has a first derivative that is less than or equal to 50 levels of grey per bar, more preferably less than 30 levels of grey per bar, at least in a pressure range comprised between 10% and 70% of said maximum pressure, more preferably between 10% and 80% of said maximum pressure. Sensitivity in sufficiently broad measurement range is thus optimized.

According to the invention, said sheet is made of elastomeric thermoplastic polyurethane. The term "elastomeric thermoplastic polyurethane" is understood as elastomeric polyurethane polyethers and elastomeric polyurethane polyesters.

Generally, polyurethanes are understood as the products of the polymerization of at least one polyalcohol (polyol) having two or more hydroxyl groups per molecule with at least one isocyanate having two or more isocyanate groups per molecule (polyisocyanate). Depending on the type of polyol, the polyurethanes are further divided into two main groups: polyethers and polyesters.

The isocyanates used in the preparation of the present elastomeric polyurethanes can be of the aliphatic type, preferably selected from among diisocyanates such as hexamethylene diisocyanate, isophorone diisocyanate, or dicyclohexyl-4,4' diisocyanate, or of the aromatic type, preferably selected from among diisocyanates such as naphthalene diisocyanate, para-phenylene diisocyanate, toluene diisocyanate (TDI) and methylene diphenyl diisocyanate (MDI), more preferably methylene diphenyl diisocyanate. Preferred elastomeric thermoplastic polyurethanes are those obtained by polymerization of aromatic isocyanates, more preferably by polymerization of aromatic diisocyanates selected from among naphthalene diisocyanate, para-phenylene diisocyanate, toluene diisocyanate (TDI) and methylene diphenyl diisocyanate (MDI).

Short-chain diols such as 1,4-butanediol for example can be used as rigid phase "chain extenders".

Preferred polyether polyurethanes are those obtained by polymerization of isocyanates, preferably of aromatic isocyanates, with polyols derived mainly from the polymerization of tetrahydrofuran (polyTHF), from the polymerization of propylene oxide or the polymerization of ethylene oxide, or by mixtures of propylene oxide and ethylene oxide.

Preferred polyester polyurethanes are those obtained by polymerization of isocyanates, preferably of aromatic isocyanates, with polyols derived preferably from the polymerization of aliphatic dicarboxylic acids, including for example adipic acid, with glycols, preferably ethylene glycol, or from the polymerization of caprolactone.

Elastomeric polyurethanes that are suitable as the principal, preferably sole, components of the elastomeric film according to the present invention are selected from the group of elastomeric thermoplastic polyurethanes (TPU) marketed under the trade names of Argoflex^{®} (Argotec), Argothane^{®} (Argotec), Epurex Platilon^{®} line, preferably Platilon^{®} U (Covestro), Desmopan^{®} (Covestro), Texin^{®} (Covestro), Pearlthane^{™} (Lubrizol), Estane^{®} (Lubrizol), Pellethane^{®} (Lubrizol), Elastollan^{®} (BASF), and Adilithe^{®} (Merylithe).

The elastomeric thermoplastic polyurethanes marketed under the trade names of Argoflex^{®} 19205 (polyether), Argothane^{®} 19103 (polyether), Epurex Platilon^{®} line, more preferably Platilon^{®} U like Epurex U073 (polyether), Epurex 4201AU (polyether) and Epurex 4100D (polyester), and Platilon^{®} U 4180 DK are particularly preferred.

Preferably, said sheet is of a thickness of less than or equal to 150 microns, more preferably less than or equal to 100 microns, and/or more than or equal to 10 microns.

In fact, the Applicant has found that the above-mentioned materials and/or the above-mentioned thicknesses give the sheet optimal characteristics in terms of the quality of the results of the measurement method, consistently with the fact of meeting the above-mentioned selection requirements.

Further characteristics and advantages will become more apparent from the detailed description of several example, but not exclusive, embodiments of a method and a system for detecting a pressure distribution in the footprint area of a tire in accordance with the present invention. This description is provided herein below with reference to the attached drawings, which are provided solely as approximate and thus non-limiting examples, and of which:
- Figure 1 is a schematic side view, which is not to scale, showing an exemplary measurement system in accordance with the present invention.
- Figure 2 is a schematic perspective view of a calibration device for determining the characteristic curves.
- Figures 3-5 show some examples of characteristic curves, solely for illustrative purposes.

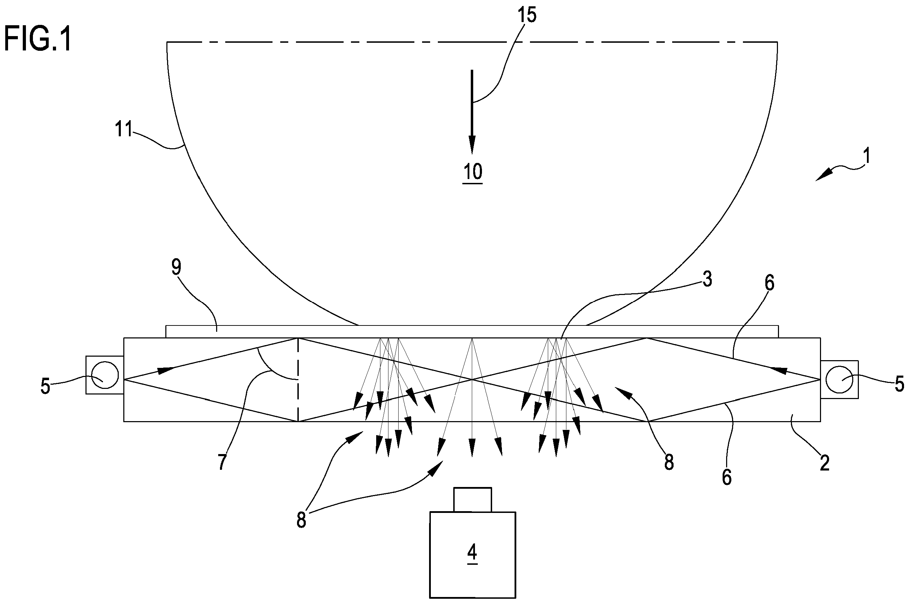

An exemplary measurement system in accordance with the present invention and that implements the method of the present invention is indicated in Figure 1 by the number 1. The system 1 comprises a plate 2 of transparent material having a resting surface 3. Suitable transparent materials can consist of glass, plexiglass or PMMA.

The system 1 comprises a camera 4 typically arranged under the plate and oriented so as to acquire digital images of the resting surface 3.

Suitable light sources 5 (e.g. LEDs) are arranged laterally with respect to the plate so as to enable inputting of a beam of light rays 6 into the plate, said light rays 6 propagating inside the plate owing to the phenomenon of total internal reflection. Based on this phenomenon, the rays forming an angle 7, with respect to the line perpendicular to the resting surface, said angle being greater than the internal critical angle associated with the resting surface, are reflected totally. For example, in the case of a glass plate in air, this internal critical angle is equal to about 41°.

When a tread 11 of a tire 10 is rested on the resting surface, this total internal reflection is suppressed because of the variation in the refraction index of the medium external to the plate. Therefore, some light rays 8 are diffused by the resting surface and they can be captured by the camera 4.

Typically, the greater the pressure exerted locally by the tire on the resting surface, the greater the number of rays diffused locally by the resting surface, in that the number of contact points between the tread and the surface is greater.

Therefore, the corresponding pressure can be associated with a given grey level in the image acquired by the camera (grey levels corresponding to the brightness detected).

During measurement, a sheet 9 is interposed in contact between the resting surface 3 and the tread 11 of the tire 10.

Therefore, for the purpose of associating, pixel by pixel, the corresponding pressure levels with the grey levels in the image acquired by the camera, the characteristic curve of the sheet 9 associated with the test system used to acquire the image and essentially made up of the plate, the sheet, the lighting system (under the operating conditions utilized to acquire the image) and the camera (under the operating conditions utilized to acquire the image) should be known. These operating conditions are determined beforehand through the acquisition of a plurality of images obtained by varying the most influential parameters (including for example sensor sensitivity, exposure time, power of the light source, etc.) and selecting one of the conditions that has generated images of acceptable quality. These conditions are maintained during the pressure distribution detection process.

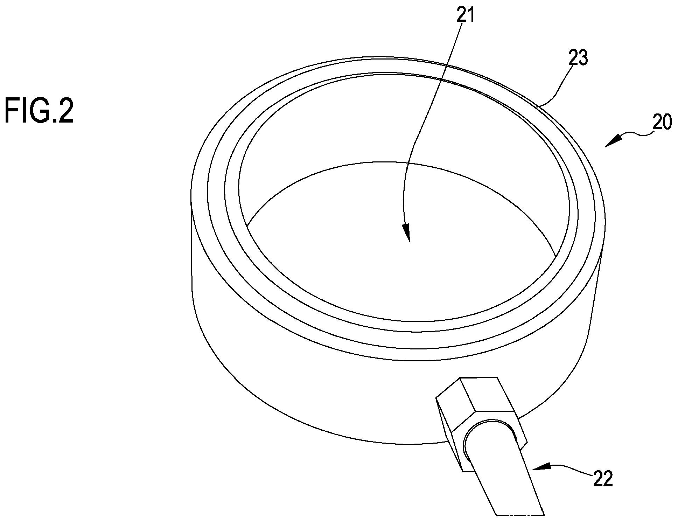

A calibration device 20 of the type shown in Figure 2 can be used for the purpose of determining the characteristic curve.

This device, which is substantially shaped in the form of a cup made of a metal such as steel, has a cavity 21 within which the pressure can be changed, for example by letting air in or out through a conduit 22 in communication with the cavity. A suitable gasket 23 (e.g. an O-ring) extends around the entire circular edge to ensure sufficient airtightness.

The device 20 is rested on the sheet 9 of the system 1, without the tire 10, with the gasket 23 adhering to the sheet 9, and the pressure in the cavity 21 is regulated.

The device 20 is of a diameter that is adequate (for example 5 cm) for the device 20 to exert substantially homogeneous pressure on a sufficiently large area of the sheet 9.

Furthermore, the device 20 is of a weight that is suitable (for example 200 g) for developing adequate pressure inside the cavity 21, e.g. 10 bar.

One then proceeds to change the pressure in the cavity 21 in a controlled manner and the corresponding grey-level value is detected, mediating on the area affected by the device 20.

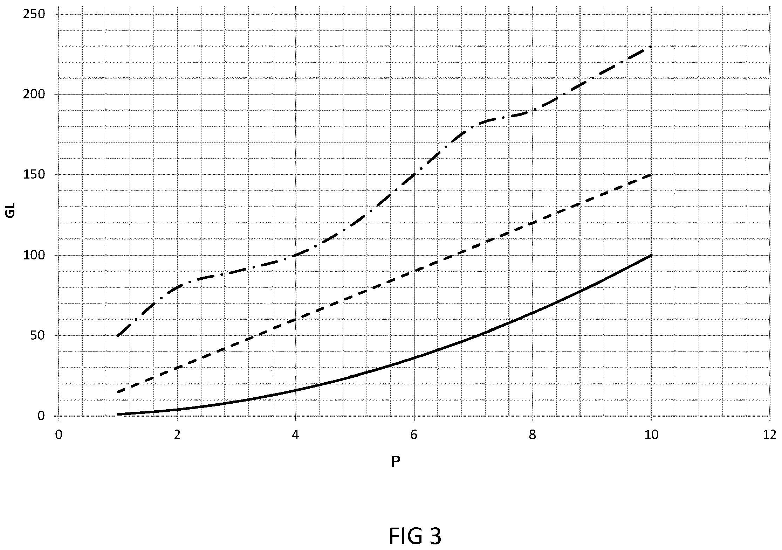

Figure 3 shows some examples of characteristics curves that meet the requirements, in which the predetermined maximum pressure to be detected is equal to 10 bar. The vertical axis in Figure 3 represents the pressure expressed in bars and the horizontal axis represents the corresponding grey-level value (wherein the full scale is equal to 256). As can be seen, at the maximum pressure of 10 bar, the characteristic curves have a grey-level value that is less than or equal to 230 levels of grey (that is, 90% of the full-scale grey level).

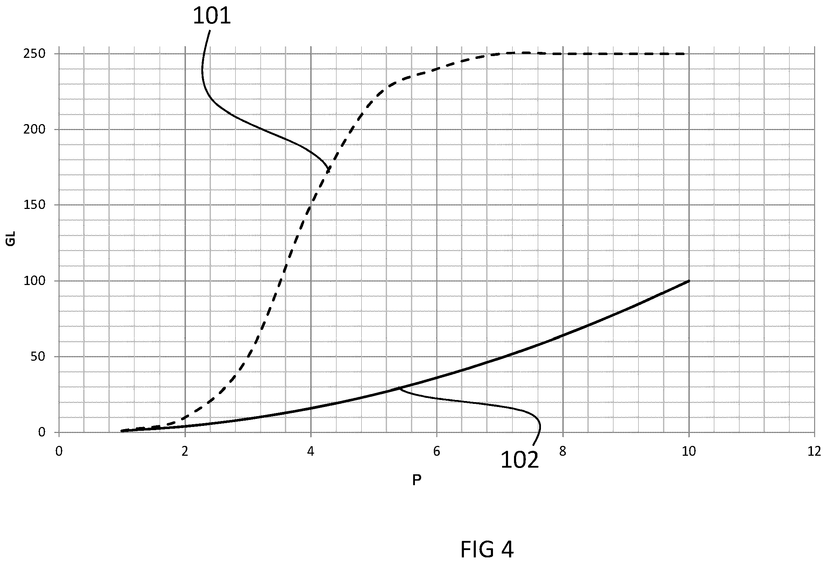

Figure 4 compares an example of a characteristic curve (line 102) that meets the requirements and an example of a comparative curve (line 101) that tends to saturate too quickly, the predetermined maximum pressure to be detected being equal to 10 bar. At the maximum pressure, line 102 has a grey level equal to about 100 (below 90% of the full scale), whereas line 101 has a grey level equal to about 250 (above 90% of the full scale).

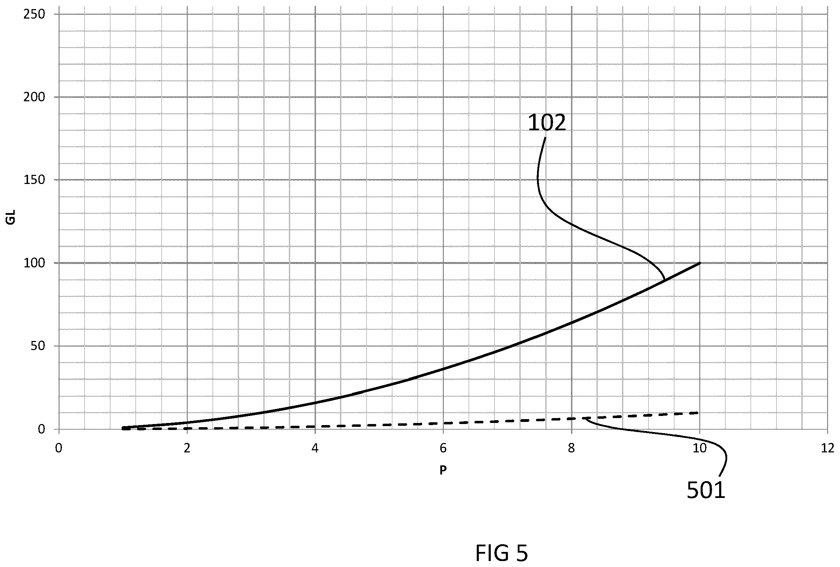

Figure 5 compares the above-mentioned example of a characteristic curve (line 102) and a comparative curve (line 501) that has a derivative that is too low (less than 2 levels of grey per bar), determining excessive lowering of the corresponding grey-level values.

To detect the pressure distribution in a footprint area of the tire, one can proceed using the following method.

The tire 10 to be tested is mounted on a wheel rim and inflated at a pressure of at least 0.5 bar, typically between 1 and 3 bar.

After having rested the tread 11 on the sheet 9, the tread is pushed against the resting surface with a certain force 15, for example applied on the axis of the wheel rim and directed perpendicularly to the plate (in Figure 1, the force 15 is directed vertically downwards). In this manner, a footprint is generated on the resting surface, said footprint having a pressure distribution on the footprint area.

At this point, a digital image of the footprint area is acquired, in which a grey level is associated with each pixel, the image being characterized by a full-scale grey level, for example equal to level 256 for the maximum brightness.

The image is then processed (as known and described for example in the articles cited hereinabove and included here for reference) for the purpose of detecting the pressure distribution in the footprint area, using the characteristic curve associated with the test system used.

According to the present invention, the sheet 9 used is for example a sheet of polyurethane marketed by Covestro^{®} with the name Platilon^{®} U 4180 DK Night Black and having a thickness of 25 µm.

Subjecting the above-mentioned sheet of Platilon^{®} U 4180 DK Night Black to the above-mentioned test run, with an inflation pressure equal to 2 bar and with a load equal to 400 Kg, the difference, in absolute value, between the first and the second area as defined above is equal to about 2% of the first area.

## Claims

1. A method for detecting a pressure distribution in a footprint area of a tire (10), comprising:
- arranging said tire mounted on a wheel rim and inflated;
- arranging a plate (2) of transparent material having a resting surface (3), and a camera (4) suitable for acquiring images of said resting surface;
- inputting a beam of light rays (6) into the plate, said light rays (6) propagating at an angle (7), with respect to a line perpendicular to said resting surface, said angle (7) being greater than an internal critical angle associated with said resting surface;
- pushing a tread (11) of said tire against said resting surface with a force, for the purpose of generating said footprint area on said resting surface and acquiring an image of said footprint area;
- processing said image for the purpose of detecting said pressure distribution in said footprint area;
wherein a sheet (9) is interposed between said tread (11) and said resting surface (3) during the acquisition of said image,
**characterized in that** said sheet is made of elastomeric thermoplastic polyurethane.

2. The method according to claim 1, wherein said sheet (9) is made of elastomeric polyurethane polyether or elastomeric polyurethane polyester.

3. The method according to claim 1 or 2, wherein said elastomeric thermoplastic polyurethane is obtained by polymerization of aromatic isocyanates.

4. The method according to claim 3, wherein said elastomeric thermoplastic polyurethane is obtained by polymerization of aromatic diisocyanates selected from among: naphthalene diisocyanate, para-phenylene diisocyanate, toluene diisocyanate (TDI) and methylene diphenyl diisocyanate (MDI).

5. The method according to any one of the preceding claims, wherein said elastomeric thermoplastic polyurethane is selected from the group of elastomeric thermoplastic polyurethanes (TPU) marketed under the trade names of Argoflex^{®} (Argotec), Argothane^{®} (Argotec), Epurex Platilon^{®}line, preferably Platilon^{®} U (Covestro), Desmopan^{®} (Covestro), Texin^{®} (Covestro), Pearlthane^{™} (Lubrizol), Estane^{®} (Lubrizol), Pellethane^{®} (Lubrizol), Elastollan^{®} (BASF), and Adilithe^{®} (Merylithe).

6. The method according to any one of the preceding claims, where said sheet (9) is of a thickness of less than or equal to 150 microns and more than or equal to 10 microns.

7. A system (1) for detecting a pressure distribution in a footprint area of a tire (10), the system comprising:
- a plate (2) of transparent material having a resting surface (3),
- a camera (4) suitable for acquiring a digital image of said resting surface (11);
- a light source (5) configured to input a beam of light rays (6) into the plate, said light rays (6) being propagated into the plate at an angle (7), with respect to a line perpendicular to said resting surface, said angle (7) being greater than an internal critical angle associated with said resting surface;
- a sheet (9) placed in contact with said resting surface,
**characterized in that** said sheet (9) is made of elastomeric thermoplastic polyurethane.

8. The system according to claim 7, wherein said sheet (9) is made of elastomeric polyurethane polyether or elastomeric polyurethane polyester.

9. The system according to claim 7 or 8, wherein said elastomeric thermoplastic polyurethane is obtained by polymerization of aromatic isocyanates.

10. The system according to claim 9, wherein said elastomeric thermoplastic polyurethane is obtained by polymerization of aromatic diisocyanates selected from among: naphthalene diisocyanate, para-phenylene diisocyanate, toluene diisocyanate (TDI) and methylene diphenyl diisocyanate (MDI).

11. The system according to any one of claims 7 to 10, wherein said elastomeric thermoplastic polyurethane is selected from the group of elastomeric thermoplastic polyurethanes (TPU) marketed under the trade names of Argoflex^{®} (Argotec), Argothane^{®} (Argotec), Epurex Platilon^{®} line, preferably Platilon^{®} U (Covestro), Desmopan^{®} (Covestro), Texin^{®} (Covestro), Pearlthane^{™} (Lubrizol), Estane^{®} (Lubrizol), Pellethane^{®} (Lubrizol), Elastollan^{®} (BASF), and Adilithe^{®} (Merylithe).

12. The system according to any one of claims 7 to 11, where said sheet (9) is of a thickness of less than or equal to 150 microns and more than or equal to 10 microns.

## Patentansprüche

1. Verfahren zum Erfassen einer Druckverteilung in einer Aufstandsfläche eines Reifens (10), umfassend:
- Anordnen des Reifens, der auf einer Radfelge montiert und aufgepumpt ist;
- Anordnen einer Platte (2) aus transparentem Material, die eine Auflageoberfläche (3) und eine Kamera (4) aufweist, die zum Erfassen von Bildern der Auflageoberfläche geeignet ist;
- Einkoppeln eines Bündels von Lichtstrahlen (6) in die Platte, wobei sich die Lichtstrahlen (6) in einem Winkel (7) in Bezug auf eine Linie senkrecht zu der Auflageoberfläche ausbreiten, wobei der Winkel (7) größer als ein innerer kritischer Winkel ist, der der Auflageoberfläche zugeordnet ist;
- Drücken einer Lauffläche (11) des Reifens gegen die Auflageoberfläche mit einer Kraft, zum Zweck eines Erzeugens der Aufstandsfläche auf der Auflageoberfläche und des Erfassens eines Bildes der Aufstandsfläche;
- Verarbeiten des Bildes zum Zweck des Erfassens der Druckverteilung in der Aufstandsfläche;
wobei ein Bogen (9) während der Erfassung des Bildes zwischen der Lauffläche (11) und der Auflageoberfläche (3) angeordnet ist,
**dadurch gekennzeichnet, dass** der Bogen aus elastomerem thermoplastischem Polyurethan hergestellt ist.

2. Verfahren nach Anspruch 1, wobei der Bogen (9) aus elastomerem Polyurethanpolyether oder elastomerem Polyurethanpolyester hergestellt ist.

3. Verfahren nach Anspruch 1 oder 2, wobei das elastomere thermoplastische Polyurethan durch Polymerisation aromatischer Isocyanate erhalten wird.

4. Verfahren nach Anspruch 3, wobei das elastomere thermoplastische Polyurethan durch Polymerisation aromatischer Diisocyanate erhalten wird, ausgewählt aus: Naphthalendiisocyanat, para-Phenylendiisocyanat, Toluoldiisocyanat (TDI) und Methylendiphenyldiisocyanat (MDI).

5. Verfahren nach einem der vorstehenden Ansprüche, wobei das elastomere thermoplastische Polyurethan ausgewählt ist aus der Gruppe von elastomeren thermoplastischen Polyurethanen (TPU), die unter den Handelsnamen Argoflex^{®} (Argotec), Argothane^{®} (Argotec), Epurex Platilon^{®}-Linie, vorzugsweise Platilon^{®}U (Covestro), Desmopan^{®} (Covestro), Texin^{®} (Covestro), Pearlthan^{™} (Lubrizol), Estane^{®} (Lubrizol), Pellethane^{®} (Lubrizol), Elastollan^{®} (BASF) und Adilithe^{®} (Merylithe) vertrieben werden.

6. Verfahren nach einem der vorstehenden Ansprüche, wobei der Bogen (9) eine Dicke von weniger als oder gleich 150 Mikrometern und mehr als oder gleich 10 Mikrometern aufweist.

7. System (1) zum Erfassen einer Druckverteilung in einer Aufstandsfläche eines Reifens (10), das System umfassend:
- eine Platte (2) aus transparentem Material, die eine Auflageoberfläche (3) aufweist,
- eine Kamera (4), die zum Erfassen eines digitalen Bildes der Auflageoberfläche (11) geeignet ist;
- eine Lichtquelle (5), die konfiguriert ist, um ein Bündel von Lichtstrahlen (6) in die Platte einzukoppeln, wobei sich die Lichtstrahlen (6) in der Platte in einem Winkel (7) in Bezug auf eine Linie senkrecht zu der Auflageoberfläche ausbreiten, wobei der Winkel (7) größer als ein innerer kritischer Winkel ist, der der Auflageoberfläche zugeordnet ist;
- einen Bogen (9), der in Kontakt mit der Auflageoberfläche platziert ist, **dadurch gekennzeichnet, dass** der Bogen (9) aus elastomerem thermoplastischem Polyurethan hergestellt ist.

8. System nach Anspruch 7, wobei der Bogen (9) aus elastomerem Polyurethanpolyether oder elastomerem Polyurethanpolyester hergestellt ist.

9. System nach Anspruch 7 oder 8, wobei das elastomere thermoplastische Polyurethan durch Polymerisation aromatischer Isocyanate erhalten wird.

10. System nach Anspruch 9, wobei das elastomere thermoplastische Polyurethan durch Polymerisation aromatischer Diisocyanate erhalten wird, ausgewählt aus: Naphthalendiisocyanat, para-Phenylendiisocyanat, Toluoldiisocyanat (TDI) und Methylendiphenyldiisocyanat (MDI).

11. System nach einem der Ansprüche 7 bis 10, wobei das elastomere thermoplastische Polyurethan ausgewählt ist aus der Gruppe von elastomeren thermoplastischen Polyurethanen (TPU), die unter den Handelsnamen Argoflex^{®} (Argotec), Argothane^{®} (Argotec), Epurex Platilon^{®}-Linie, vorzugsweise Platilon^{®}U (Covestro), Desmopan^{®} (Covestro), Texin^{®} (Covestro), Pearlthan^{™} (Lubrizol), Estane^{®} (Lubrizol), Pellethane^{®} (Lubrizol), Elastollan^{®} (BASF) und Adilithe^{®} (Merylithe) vertrieben werden.

12. System nach einem der Ansprüche 7 bis 11, wobei der Bogen (9) eine Dicke von weniger als oder gleich 150 Mikrometern und mehr als oder gleich 10 Mikrometern aufweist.

## Revendications

1. Procédé de détection d'une distribution de pression dans une aire d'empreinte d'un pneu (10), comprenant :
- la disposition dudit pneu monté sur une jante de roue et gonflé ;
- la disposition d'une plaque (2) d'un matériau transparent ayant une surface d'appui (3), et d'une caméra (4) adaptée pour acquérir des images de ladite surface d'appui ;
- l'introduction d'un faisceau de rayons lumineux (6) dans la plaque, lesdits rayons lumineux (6) se propageant selon un angle (7) par rapport à une ligne perpendiculaire à ladite surface d'appui, ledit angle (7) étant supérieur à un angle critique interne associé à ladite surface d'appui ;
- la poussée d'une bande de roulement (11) dudit pneu contre ladite surface d'appui avec une force, dans le but de générer ladite aire d'empreinte sur ladite surface d'appui et d'acquérir une image de ladite aire d'empreinte ;
- le traitement de ladite image dans le but de détecter ladite distribution de pression dans ladite aire d'empreinte ;
dans lequel une feuille (9) est interposée entre ladite bande de roulement (11) et ladite surface d'appui (3) pendant l'acquisition de ladite image,
**caractérisé en ce que** ladite feuille est faite de polyuréthane thermoplastique élastomère.

2. Procédé selon la revendication 1, dans lequel ladite feuille (9) est faite de polyuréthane-polyéther élastomère ou de polyuréthane-polyester élastomère.

3. Procédé selon la revendication 1 ou 2, dans lequel ledit polyuréthane thermoplastique élastomère est obtenu par polymérisation d'isocyanates aromatiques.

4. Procédé selon la revendication 3, dans lequel ledit polyuréthane thermoplastique élastomère est obtenu par polymérisation de diisocyanates aromatiques choisis parmi : un diisocyanate de naphtalène, un diisocyanate de para-phénylène, un diisocyanate de toluène (TDI) et un diisocyanate de diphénylméthane (MDI).

5. Procédé selon l'une quelconque des revendications précédentes, dans lequel ledit polyuréthane thermoplastique élastomère est choisi dans le groupe de polyuréthanes thermoplastiques élastomères (TPU) commercialisés sous les noms commerciaux d'Argoflex^{®} (Argotec), Argothane^{®} (Argotec), gamme Epurex Platilon^{®}, de préférence, Platilon^{®}U (Covestro), Desmopan^{®} (Covestro),
Texin^{®} (Covestro), Pearlthane^{™} (Lubrizol), Estane^{®} (Lubrizol), Pellethane^{®} (Lubrizol), Elastollan^{®} (BASF), et Adilithe^{®} (Merylithe).

6. Procédé selon l'une quelconque des revendications précédentes, dans lequel ladite feuille (9) a une épaisseur inférieure ou égale à 150 micromètres et supérieure ou égale à 10 micromètres.

7. Système (1) de détection d'une distribution de pression dans une aire d'empreinte d'un pneu (10), le système comprenant :
- une plaque (2) d'un matériau transparent ayant une surface d'appui (3),
- une caméra (4) adaptée pour acquérir une image numérique de ladite surface d'appui (11) ;
- une source de lumière (5) configurée pour introduire un faisceau de rayons lumineux (6) dans la plaque, lesdits rayons lumineux (6) se propageant dans la plaque selon un angle (7) par rapport à une ligne perpendiculaire à ladite surface d'appui, ledit angle (7) étant supérieur à un angle critique interne associé à ladite surface d'appui ;
- une feuille (9) placée en contact avec ladite surface d'appui,
**caractérisé en ce que** ladite feuille (9) est faite de polyuréthane thermoplastique élastomère.

8. Système selon la revendication 7, dans lequel ladite feuille (9) est faite de polyuréthane-polyéther élastomère ou de polyuréthane-polyester élastomère.

9. Système selon la revendication 7 ou 8, dans lequel ledit polyuréthane thermoplastique élastomère est obtenu par polymérisation d'isocyanates aromatiques.

10. Système selon la revendication 9, dans lequel ledit polyuréthane thermoplastique élastomère est obtenu par polymérisation de diisocyanates aromatiques choisis parmi : un diisocyanate de naphtalène, un diisocyanate de para-phénylène, un diisocyanate de toluène (TDI) et un diisocyanate de diphénylméthane (MDI).

11. Système selon l'une quelconque des revendications 7 à 10, dans lequel ledit polyuréthane thermoplastique élastomère est choisi dans le groupe de polyuréthanes thermoplastiques élastomères (TPU) commercialisés sous les noms commerciaux d'Argoflex^{®} (Argotec), Argothane^{®} (Argotec), gamme Epurex Platilon^{®}, de préférence, Platilon^{®}U (Covestro), Desmopan^{®} (Covestro),
Texin^{®} (Covestro), Pearlthane^{™} (Lubrizol), Estane^{®} (Lubrizol), Pellethane^{®} (Lubrizol), Elastollan^{®} (BASF), et Adilithe^{®} (Merylithe).

12. Système selon l'une quelconque des revendications 7 à 11, dans lequel ladite feuille (9) a une épaisseur inférieure ou égale à 150 micromètres et supérieure ou égale à 10 micromètres.
